# EUROPÄISCHE PATENTSCHRIFT

(11) **EP 0 971 573 B1**
(45) Veröffentlichungstag und Bekanntmachung des Hinweises auf die Patenterteilung: **30.08.2006**
(21) Anmeldenummer: 99112478.5
(22) Anmeldetag: 01.07.1999
(51) Int. Cl.: H05K 7/20, H02M 7/00, G05D 23/19

(54) **Kühlmitteltemperaturregelung zur Regelung der Kühlmitteltemperatur eines Stromrichters eines elektrisch angetriebenen Fahrzeuges**
Cooling means temperature control for electrically driven vehicle inverter
Régulation de la température du moyen de refroidissement pour onduleur de véhicule à traction électrique

(30) Priorität: 09.07.1998 DE 19830656
(43) Veröffentlichungstag der Anmeldung: 12.01.2000
(73) Patentinhaber: Bombardier Transportation GmbH, 13627 Berlin (DE)
(72) Erfinder: Hilpert, Gerald, 78787 Lauchringen (DE)
(74) Vertreter: Thielmann, Andreas

(56) Entgegenhaltungen:
- FUHRER W M ET AL: "WATER-COOLED HIGH POWER GTO CONVERTERS FOR ELECTRIC TRACTION" PROCEEDINGS OF THE EUROPEAN CONFERENCE ON POWER ELECTRONICS AND APPLICATIONS,GB,LONDON, IEE, Bd. CONF. 5, 13. September 1993 (1993-09-13), Seiten 294-298, XP000416909
- PATENT ABSTRACTS OF JAPAN vol. 018, no. 480 (E-1603), 8. September 1994 (1994-09-08) & JP 06 164178 A (MITSUBISHI ELECTRIC CORP), 10. Juni 1994 (1994-06-10)
- PATENT ABSTRACTS OF JAPAN vol. 017, no. 295 (E-1377), 7. Juni 1993 (1993-06-07) & JP 05 021975 A (KOUFU NIHON DENKI KK), 29. Januar 1993 (1993-01-29)

## Beschreibung

### TECHNISCHES GEBIET

Die Erfindung bezieht sich auf das Gebiet der Kühltechnik von leistungselektronischen Schaltungen. Sie geht aus von einer Kühlmitteltemperaturregelung zur Regelung der Kühlmitteltemperatur eines Stromrichters eines elektrisch angetriebenen Fahrzeuges, insbesondere einer elektrischen Lokomotive, gemäss dem Oberbegriff des ersten Anspruchs.

### STAND DER TECHNIK

Hochleistungs-Traktionsstromrichter sind ständig den Schwankungen der Umgebungstemperatur unterworfen. Diese Schwankungen werden massgeblich beeinflusst durch den Jahreszyklus und den Tageszyklus. Darüber hinaus treten Schwankungen der Kühlmitteltemperatur auf, die verursacht werden durch die stark variierende Stromrichter-Verlustleistung während der Lastzyklen (Stillstand, Anfahren, Fahren, Bremsen). Das Kühlmedium des Stromrichters (z.B. Öl oder Wasser mit Glykol) ist über einen Kühlmittel-Luft-Rückkühler an die Umgebungstemperatur gebunden. Die Kühlmitteltemperatur und damit die Temperatur der angeschlossenen Komponenten, insbesondere der Leistungshalbleiterschalter, wird möglichst niedrig gehalten und die Stromrichterverlustleistung in die Umgebung abgeführt. Bei Stillstandzeiten und im Schwachlastbetrieb des Fahrzeuges wird das Kühlmedium relativ schnell auf die Umgebungstemperatur abgekühlt. Während des Hochlastbetriebes erwärmt sich das Kühlmedium auf ca. 10 bis 20K über die Umgebungstemperatur.

Nach dem Stand der Technik folgt die Kühlmitteltemperatur somit der Umgebungstemperatur bis auf die Temperaturdifferenzen, die durch den Lastzyklus verursacht werden. Die Umgebungstemperaturschwankungen und die überlagerten Lastzyklus-Temperaturschwankungen, die recht erheblich sein können, werden also an alle an den Kühlkreislauf angeschlossenen Komponenten direkt weitergegeben. Dies hat eine harte Temperaturwechselbeanspruchung zur Folge, welche die Lebensdauer der Komponenten stark reduziert. Insbesondere Halbleitermodule mit integriertem Kühler und Lötverbindungen zwischen Halbleitern, Isolationsschicht und Kühler werden dadurch stark beansprucht. Durch das häufige Auftreten der Zyklen - bei einer geforderten Lebensdauer von 30 Jahren einer Lokomotive ergeben sich 30 Jahreszyklen, ca. 11'000 Tageszyklen und ca. 500'000 Lastzyklen - können sich Lebensdauerprobleme ergeben.

### DARSTELLUNG DER ERFINDUNG

Aufgabe der Erfindung ist es daher, eine Kühlmitteltemperaturregelung zur Regelung der Kühlmitteltemperatur eines Stromrichters eines elektrisch angetriebenen Fahrzeuges anzugeben, durch welche Regelung die Komponenten des Stromrichters weniger ausgeprägten Lastwechseln ausgesetzt sind und damit das gesamte Fahrzeug eine höhere Lebensdauer aufweist. Diese Aufgabe wird durch die Merkmale des Anspruchs 1 gelöst.

Kern der Erfindung ist es also, dass die Kühlmitteltemperaturregelung die Kühlmitteltemperatur auf einen von der momentanen Umgebungstemperatur unabhängigen Sollwert regelt. Insbesondere kann als Sollwert ein erwartetes Tagesmaximum, ein Tagesmittelwert oder ein optimierter Sollwertverlauf verwendet werden. Über ein Jahr hinweg kann der Sollwert dem Jahresverlauf nachgeführt werden.

Die Vorteile der Erfindung sind insbesondere darin zu sehen, dass die Schwankungen der Umgebungstemperatur nicht mehr direkt auf die Komponenten im Kühlkreislauf übertragen werden, und dass die Kühlmitteltemperaturschwankungen, welche durch die stark variierenden Verlustleistungen während der Lastzyklen verursacht werden, vernachlässigbar klein gehalten werden. Die extremen Temperaturschwankungen, denen die Komponenten ausgesetzt waren, können vermieden werden. Das Temperaturwechselprofil wird durch die Erfindung wesentlich entschärft, und die Komponenten erreichen eine um Faktoren zwischen 2 und 10 höhere Lebensdauer.

Weitere vorteilhafte Ausführungsformen ergeben sich aus den entsprechenden abhängigen Ansprüchen.

### KURZE BESCHREIBUNG DER ZEICHNUNGEN

Nachfolgend wird die Erfindung anhand von Ausführungsbeispielen im Zusammenhang mit den Zeichnungen näher erläutert.

Es zeigen:
- Fig. 1: Ein Blockschema des erfindungsgemässen Reglers;
- Fig. 2: Tagesverlauf der Umgebungstemperatur, der Kühlmitteltemperatur nach dem Stand der Technik und der Kühlmitteltemperatur nach der Erfindung. Beispiel für einen Sommertag in Mitteleuropa;

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

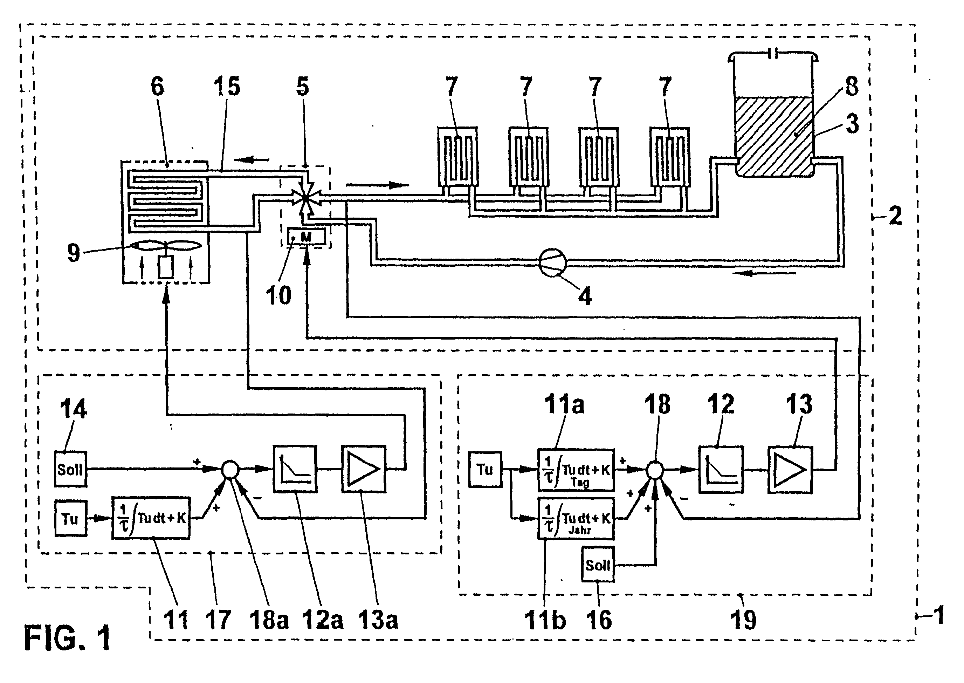

Figur 1 zeigt ein Blockschema einer erfindungsgemässen Kühlmitteltemperaturregelung 1. Mit 2 ist der Kühlmittelkreislauf bezeichnet. Der Kühlmittelkreislauf umfasst ein Ausgleichsgefäss 3, aus welchem Kühlmittel 8 mit Hilfe einer Pumpe 4 einem Mischventil 5 zugeführt wird. Im Mischer 5 wird das vom Ausgleichsgefäss 3 kommende Kühlmittel an einen zum Kühlmittelkreislauf 15 des Fahrzeuges gehörenden Rückkühler 6 an- oder abgekoppelt. Das gemischte Kühlmittel wird dann dem zu kühlenden Komponenten des Stromrichters 7, insbesondere den Halbleiterkomponenten, zugeführt und fliesst von dort zurück zum Ausgleichsgefäss 3. Die Temperatur des Kühlmittels 8 kann dadurch geregelt werden, dass auf ein Stellglied 10 des Mischers 5 eingegriffen wird. Der Eingriff erfolgt nach Massgabe des Vorlauf-Regelkreises 19.

Der Vorlauf-Regelkreis 19 umfasst einen Umgebungstemperatursensor, einen Vorlauftemperatursensor, zwei Integratoren mit stark unterschiedlichen Integrationszeitkonstanten, für die Verarbeitung der Tagestemperatur 11a und der Jahrestemperatur 11b, wobei einer dieser Integratoren auch entfallen kann, eine Sollwertvorgabe 16, einen Summationspunkt 18, einen Regler 12 und einen Verstärker 13.

Die Umgebungstemperatur wird mit Hilfe der Integratoren 11a und 11b aufbereitet, zum Sollwert addiert und mit der Vorlauftemperatur verglichen. Eine Regeldifferenz führt über den Regler 12, welcher insbesondere als PI-Regler aufgebaut sein kann und den Verstärker 13 zu einer Änderung der Mischerstellung 10. Kurzzeitige Änderungen der Umgebungstemperatur, die eine Änderung der Kühlmittel-Temperatur, im eventuell ungeregelten Rückkühler-Kühlmittelkreislauf 15 hervorrufen und kurzzeitige Änderungen der Verlustleistung, die von den Stromrichter-Komponenten 7 in den Kühlkreislauf abgegeben wird, werden durch den Mischereingriff ausgeregelt. Die Vorlauftemperatur wird nicht oder nur unwesentlich beeinträchtigt.

Ausserdem kann ein Regelkreis zur Regelung des Rückkühler-Kühlmittelkreislaufs 17 vorgesehen sein. Dieser besteht aus einem Umgebungstemperatursensor, einem Fahrzeug-Vorlauftemperatursensor, einem Integrator 11, einer Sollwertvorgabe, einem Summationspunkt 18a, einem Regler 12a und einem Verstärker 13a. Die Umgebungstemperatur wird mit Hilfe des Integrators 11 aufbereitet, zum Sollwert addiert und mit der Fahrzeug-Vorlauftemperatur verglichen. Eine Regeldifferenz führt über den Regler 12a, welcher insbesondere als PI-Regler aufgebaut sein kann und den Verstärker 13a zu einer Änderung der Lüftergeschwindigkeit. Die Rückkühlwirkung, welche wesentlich vom LuftVolumenstrom im Rückkühler abhängt, kann somit an die aktuelle, abzuführende Verlustleistung und an die Umgebungstemperaturschwankungen angepasst werden. So werden beispielsweise die Auswirkungen von kurzzeitigen, sehr hohen Umgebungstemperaturen, wie sie in der Mittagssonne auftreten, mit erhöhtem Volumenstrom im Rückkühler reduziert.

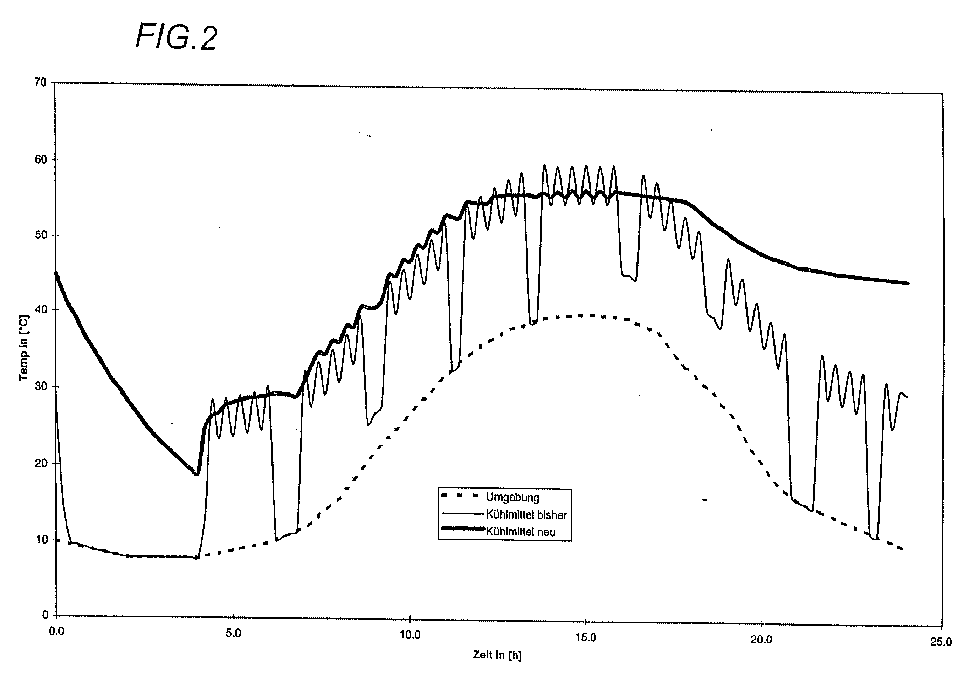

Mit dem oben beschriebenen Regler erreicht man gegenüber dem Stand der Technik vorteilhafte Resultate, wie in der Figur 2 dargestellt ist. Figur 2 zeigt am Beispiel eines Sommertages in Mitteleuropa den Tagesverlauf der Umgebungstemperatur. Ebenfalls aufgetragen sind die Kühlmitteltemperatur nach der Regelung gemäss dem Stand der Technik, bei der die Kühlmitteltemperatur nach Massgabe der momentanen Umgebungstemperatur geregelt wird, und gemäss der Erfindung, bei der die Kühlmitteltemperatur nach Massgabe eines von der momentanen Umgebungstemperatur unabhängigen Sollwertes geregelt wird.

Deutlich ist zu sehen, wie die Kühlmitteltemperatur mit der Regelung nach dem Stand der Technik eine sehr hohe Anzahl lastspielabhängiger Temperaturschwankungen im Bereich von ca. 5 bis 20K aufweist, während die erfindungsgemässe Lösung diese Kühlmitteltemperatur-Schwankungen auf einen vernachlässigbaren Wert glättet. Weiterhin ist erkennbar, dass die nächtliche Tiefsttemperatur bei der erfindungsgemässen Lösung höher und die Tages-Höchsttemperatur niedriger liegt als nach dem Stand der Technik. Die Kühlmitteltemperatur nach der erfindungsgemässen Lösung verläuft viel ausgeglichener. Dadurch werden die Komponenten weniger starken Temperaturlastwechseln ausgesetzt. Dies resultiert letztlich in einer erhöhten Lebensdauer der Komponenten.

Insgesamt erreicht man mit der Erfindung eine stark verringerte Lastwechselbeanspruchung der Komponenten und dadurch eine erhöhte Lebensdauer des Fahrzeuges.

### BEZUGSZEICHENLISTE

- 1: Kühlmitteltemperaturregelung
- 2: Kühlmittelkreislauf
- 3: Ausgleichsgefäss
- 4: Pumpe
- 5: Mischventil
- 6: Rückkühler
- 7: Stromrichterkomponenten
- 8: Kühlmittel
- 9: Ventilator
- 10: Stellglied des Mischventils
- 11: Integrator
- 11a: Integrator für Tagestemperaturverlauf
- 11b: Integrator für Jahrestemperaturverlauf
- 12, 12a: Regler
- 13, 13a: Verstärker
- 14: Sollwertvorgabe Rückkühler
- 15: Rückkühler-Kühlmittelkreislauf
- 16: Sollwertvorgabe Vorlauf-Regelkreis
- 17: Rückkühler-Kühlmittelkreislauf-Regelkreis
- 18, 18a: Summationspunkt
- 19: Vorlauf-Regelkreis
- Tu: Umgebungstemperatur

## Patentansprüche

1. Verfahren zur Regelung der Vorlauftemperatur des Kühlmittels im Zulauf eines Kühlkreislaufs (2) zu einem Stromrichter (7) eines elektrisch angetriebenen Fahrzeuges, insbesondere einer elektrischen Lokomotive, **dadurch gekennzeichnet, dass** die Vorlauftemperatur unter Verwendung einer von der momentanen Umgebungstemperatur unabhängigen Temperatur-Sollwert-Komponente geregelt wird.

2. Verfahren nach Anspruch 1, **dadurch gekennzeichnet, dass** die Temperatur-Sollwert-Komponente einem erwarteten Tagestemperaturmaximum oder einem Tagestemperaturmittelwert entspricht oder gemäß einem vorgegebenen Verlauf variiert wird.

3. Verfahren nach Anspruch 2, **dadurch gekennzeichnet, dass** die Temperatur-Sollwert-Komponente dem Jahrestemperaturverlauf nachgeführt wird.

4. Verfahren nach einem der vorstehenden Ansprüche, **dadurch gekennzeichnet, dass** mittels eines Mischventils (5) der Kühlkreislauf (2) des Stromrichters mit einem Kühlkreislauf (15) des Fahrzeuges gekoppelt oder entkoppelt wird.

5. Verfahren nach einem der vorstehenden Ansprüche, **dadurch gekennzeichnet, dass** zur Regelung der Rückkühlung des Kühlmittels in einem Kühlkreislauf (15) die Ventilatordrehzahl eines Kühlmittel-Luft-Rückkühlers (6) beeinflusst wird.

6. Verfahren nach einem der vorstehenden Ansprüche, **dadurch gekennzeichnet, dass** die Regelung der Vorlauftemperatur über einen Regler (12) mit einem Reglereingang erfolgt, wobei dem Reglereingang ein von der Temperatur-Sollwert-Komponente abgeleiteter Eingangswert zugeführt wird.

7. Verfahren nach Anspruch 6, **dadurch gekennzeichnet, dass**
- ein Summenwert aus der Temperatur-Sollwert-Komponente, wenigstens einem von der momentanen Umgebungstemperatur abgeleiteten Temperaturwert und der negativen momentanen Vorlauftemperatur gebildet wird und
- der Summenwert als Eingangswert dem Reglereingang des Reglers (12) zugeführt wird.

8. Regeleinrichtung mit einem Vorlauf-Regelkreis (19) zur Regelung der Vorlauftemperatur des Kühlmittels im Zulauf eines Kühlkreislaufs (2) zu einem Stromrichter (7) eines elektrisch angetriebenen Fahrzeuges, insbesondere einer elektrischen Lokomotive, **dadurch gekennzeichnet, dass** der Vorlauf-Regelkreis (19) zur Regelung die Vorlauftemperatur unter Verwendung einer von der momentanen Umgebungstemperatur unabhängigen Temperatur-Sollwert-Komponente ausgebildet ist.

9. Regeleinrichtung nach Anspruch 8, **dadurch gekennzeichnet, dass** der Vorlauf-Regelkreis (19) einen Regler (12) umfasst, über den ein Mischventil (5) zur Regelung der Vorlauftemperatur ansteuerbar ist.

10. Regeleinrichtung nach Anspruch 9, **dadurch gekennzeichnet, dass** mittels des Mischventils (5) der Kühlkreislauf (2) des Stromrichters mit einem Kühlkreislauf (15) des Fahrzeuges koppelbar ist.

11. Regeleinrichtung nach einem der Ansprüche 8 bis 10, **dadurch gekennzeichnet, dass** der Vorlauf-Regelkreis (19) zur Regelung der Vorlauftemperatur einen Regler (12) mit einem Reglereingang und mit dem Reglereingang verbundene Mittel zur Vorgabe eines von der Temperatur-Sollwert-Komponente abgeleiteten Eingangswerts für den Reglereingang umfasst.

12. Regeleinrichtung nach Anspruch 11, **dadurch gekennzeichnet, dass** die Mittel zur Vorgabe des Eingangswerts eine mit dem Reglereingang verbundene Summiereinrichtung zur Bildung eines Summenwerts aus der Temperatur-Sollwert-Komponente, wenigstens einem von der momentanen Umgebungstemperatur abgeleiteten Wert und der negativen momentanen Vorlauftemperatur umfassen.

13. Regeleinrichtung nach einem der Ansprüche 8 bis 12, **dadurch gekennzeichnet, dass** der Vorlauf-Regelkreis (19) eine Vorgabeeinrichtung (16) zur Vorgabe der Temperatur-Sollwert-Komponente umfasst, wobei die vorgegebene Temperatur-Sollwert-Komponente
- einem erwarteten Tagestemperaturmaximum entspricht oder
- einem Tagestemperaturmittelwert entspricht oder
- gemäß einem vorgegebenen Verlauf variiert.

14. Regeleinrichtung nach einem der Ansprüche 8 bis 13, **dadurch gekennzeichnet, dass** der Vorlauf-Regelkreis (19) eine Vorgabeeinrichtung (16) zur Vorgabe des Temperatur-Sollwerts umfasst, wobei der vorgegebene Temperatur-Sollwert dem Jahrestemperaturverlauf nachgeführt ist.

15. Regeleinrichtung nach einem der Ansprüche 8 bis 14, **dadurch gekennzeichnet, dass** ein Regelkreis (17) zur Regelung der Rückkühlung des Kühlmittels in einem Kühlkreislauf (15) vorgesehen ist, wobei der Regelkreis (17) zur Regelung der Ventilatordrehzahl eines Kühlmittel-Luft-Rückkühlers (6) des Kühlkreislaufs (15) ausgebildet ist.

## Claims

1. A method for controlling the feed flow temperature of the coolant in the feed branch of a cooling circuit (2) to a power converter (7) of an electrically driven vehicle, in particular an electric locomotive, **characterized in that** the feed flow temperature is controlled using a temperature set-point value component that is independent from the current ambient temperature.

2. The method according to claim 1, **characterized in that** the temperature set-point value component corresponds to an expected daily temperature maximum or a daily temperature average or is varied according to a given function.

3. The method according to claim 2, **characterized in that** the temperature set-point value component follows the annual temperature progression.

4. The method according to any one of the preceding claims, **characterized in that** the cooling circuit (2) of the power converter is coupled to or uncoupled from a cooling cycle (15) of the vehicle by a mixing valve (5).

5. The method according to any one of the preceding claims, **characterized in that**, for controlling re-cooling of the coolant in a cooling circuit (15), the fan speed of a coolant-air-re-cooler (6) is influenced.

6. The method according to any one of the preceding claims, **characterized in that** the control of the feed flow temperature is provided via a controller (12) having a controller input, wherein an input value derived from the temperature set-point value component is provided to the controller input.

7. The method according to claim 6, **characterized in that**
- a sum is calculated from the temperature set-point value component, at least one temperature value derived from the actual ambient temperature and the negative actual feed temperature and
- the sum is fed to the controller input of the controller (12).

8. A control device with a feed flow control circuit (19) for controlling the feed flow temperature of the coolant in the feed branch of a cooling circuit (2) to a power converter (7) of an electrically driven vehicle, in particular an electric locomotive, **characterized in that** the feed flow control circuit (19) is adapted to control the feed flow temperature using a temperature set-point value component that is independent from the current ambient temperature.

9. The control device according to claim 8, **characterized in that** the feed flow control circuit (19) comprises a controller (12) by which a mixing valve (15) is controlled for controlling the feed flow temperature.

10. The control device according to claim 9, **characterized in that**, via the mixing valve (5), the cooling circuit (2) of the power converter is connectable to a cooling circuit (15) of the vehicle.

11. The control device according to any one of the claims 8 to 10, **characterized in that** the feed flow control circuit (19), for controlling the feed flow temperature, has a controller (12) with a controller input and means connected to the controller input for setting an input value to the controller input derived from the temperature set-point value component.

12. The control device according to claim 11, **characterized in that** the means for setting the input value comprise a summation device for forming a sum from the temperature set-point-value component, at least one value derived from the actual ambient temperature and the negative actual feed temperature.

13. The control device according to any one of the claims 8 to 12, **characterized in that** the flow control circuit (19) comprises a setting device (16) for setting the temperature set-point-value component, wherein the set temperature set-point value component
- corresponds to an expected daily temperature maximum or
- corresponds to a daily temperature average or
- varies according to a given function.

14. The control device according to any one of the claims 8 to 13, **characterized in that** the feed flow control circuit (19) comprises a setting device (16) for setting the temperature set-point value component, wherein the temperature set-point value component follows the annual temperature progression.

15. The control device according to any one of the claims 8 to 14, **characterized in that** there is provided a control circuit (17) for controlling the re-cooling of the coolant in a cooling circuit (15), wherein the control circuit (17) is adapted to control the fan speed of a coolant-air-re-cooler of the cooling circuit (15).

## Revendications

1. Procédé de régulation de la température aller de l'agent réfrigérant dans la conduite d'alimentation d'un circuit de refroidissement (2) vers un convertisseur (7) d'un véhicule actionné par voie électrique, en particulier d'une locomotive électrique, **caractérisé en ce que** la température aller est réglée en utilisant une composante de consigne de température indépendante de la température ambiante instantanée.

2. Procédé selon la revendication 1, **caractérisé en ce que** la composante de consigne de température correspond à une température maximale quotidienne escomptée ou à une température moyenne quotidienne, ou est amenée à varier en fonction d'une évolution prédéfinie.

3. Procédé selon la revendication 2, **caractérisé en ce que** la composante de consigne de température est asservie à l'évolution annuelle de la température.

4. Procédé selon l'une quelconque des revendications précédentes, **caractérisé en ce que**, à l'aide d'une vanne mélangeuse (5), le circuit de refroidissement (2) du convertisseur est couplé ou désaccouplé par rapport à un circuit de refroidissement (15) du véhicule.

5. Procédé selon l'une quelconque des revendications précédentes, **caractérisé en ce que**, pour régler le refroidissement de l'agent réfrigérant dans un circuit de refroidissement (15), on agit sur la vitesse de rotation du ventilateur d'un dispositif de refroidissement air/agent réfrigérant (6).

6. Procédé selon l'une quelconque des revendications précédentes, **caractérisé en ce que** la régulation de la température aller est réalisée par l'intermédiaire d'un régulateur (12) comportant une entrée de régulateur, une valeur d'entrée déduite de la composante de consigne de température étant délivrée à l'entrée du régulateur.

7. Procédé selon la revendication 6, **caractérisé en ce que**
- une somme de la composante de consigne de température, d'au moins une valeur de température déduite de la température ambiante instantanée, et d'opposé de la température aller instantanée est calculée et
- la somme est délivrée comme valeur d'entrée à l'entrée de régulation du régulateur (12).

8. Dispositif de réglage comportant un circuit de réglage aller (19) permettant de réguler la température aller de l'agent réfrigérant dans la conduite d'alimentation d'un circuit de refroidissement (2) vers un convertisseur (7) d'un véhicule actionné par voie électrique, en particulier d'une locomotive électrique, **caractérisé en ce que** le circuit de réglage aller (19) est configuré afin de régler la température aller en utilisant une composante de consigne de température indépendante de la température ambiante instantanée.

9. Dispositif de réglage selon la revendication 8, **caractérisé en ce que** le circuit de réglage aller (19) comporte un régulateur (12) par l'intermédiaire duquel une vanne mélangeuse (5) peut être pilotée afin de réguler la température aller.

10. Dispositif de réglage selon la revendication 9, **caractérisé en ce que**, à l'aide de la vanne mélangeuse (5), le circuit de refroidissement (2) du convertisseur peut être couplé à un circuit de refroidissement (15) du véhicule.

11. Dispositif de réglage selon l'une quelconque des revendications 8 à 10, **caractérisé en ce que** le dispositif de réglage aller (19) permettant de réguler la température aller comporte un régulateur (12) avec une entrée de régulateur et des moyens reliés à l'entrée de régulateur afin d'indiquer une valeur d'entrée pour l'entrée de régulateur déduite de la composante de consigne de température.

12. Dispositif de réglage selon la revendication 11, **caractérisé en ce que** les moyens permettant d'indiquer la valeur d'entrée comportent un dispositif de sommation relié à l'entrée du régulateur afin de calculer la somme de la composante de consigne de température, d'au moins une valeur déduite de la température ambiante instantanée et de l'opposé de la température aller instantanée.

13. Dispositif de réglage selon l'une quelconque des revendications 8 à 12, **caractérisé en ce que** le circuit de réglage aller (19) comporte un dispositif indicateur (16) permettant d'indiquer la composante de consigne de température, la composante de consigne de température prédéfinie
- correspondant à une température maximale quotidienne escomptée ou
- correspondand à une température moyenne quotidienne ou
- variant selon une évolution prédéfinie.

14. Dispositif de réglage selon l'une quelconque des revendications 8 à 13, **caractérisé en ce que** le circuit de réglage aller (19) comporte un dispositif indicateur (16) permettant d'indiquer la valeur de consigne de température, la valeur de consigne de température prédéfinie étant asservie à l'évolution annuelle de température.

15. Dispositif de réglage selon l'une quelconque des revendications 8 à 14, **caractérisé en ce qu'**un circuit de réglage (17) permettant de régler le refroidissement de l'agent réfrigérant dans un circuit de refroidissement (15) est prévu, le circuit de réglage (17) étant configuré afin de réguler la vitesse de rotation du ventilateur d'un dispositif de refroidissement air/agent réfrigérant (6) du circuit de refroidissement (15).
